# EUROPEAN PATENT SPECIFICATION

(11) **EP 4 580 868 B1**
(45) Date of publication and mention of the grant of the patent: **14.01.2026**
(21) Application number: 23817293.6
(22) Date of filing: 15.11.2023
(51) Int. Cl.: B29D 11/00

(54) **A MOLD APPARTUS FOR MANUFACTURING A SPECTACLE LENS AND RELEVANT METHODS**
FORMENAPPARAT ZUR HERSTELLUNG EINES BRILLENGLASES UND ENTSPRECHENDE VERFAHREN
APPAREIL DE MOULAGE POUR LA FABRICATION D'UNE LENTILLE DE LUNETTES ET MÉTHODES CORRESPONDANTES

(30) Priority: 15.11.2022 WO PCT/CN2022/132001
(43) Date of publication of application: 09.07.2025
(73) Proprietor: Carl Zeiss Vision International GmbH, 73430 Aalen (DE)
(72) Inventor: OUYANG, Liu, Guangzhou, Guangdong 511495 (CN); LIANG, Jingye, Guangzhou, Guangdong 510220 (CN)
(74) Representative: Carl Zeiss AG - Patentabteilung
(86) International application number: PCT/CN2023/131698
(87) International publication number: WO 2024/104367

(56) References cited:
- EP-A1- 0 553 801
- JP-B2- 3 500 696
- US-A1- 2004 207 105
- US-A1- 2011 006 447
- US-A1- 2011 012 273

## Description

### TECHNICAL FIELD

The present invention is directed to a mold apparatus configured to manufacture a spectacle lens and a method configured to manufacture the mold apparatus, and a method configured to manufacture a spectacle lens using the mold apparatus.

### BACKGROUND

Various methods for the mass production of spectacle lenses, including finished spectacle lenses and semi-finished spectacle blanks (lens blanks; so-called pucks) are known. One of the customary production methods is molding. The molding technology of spectacle lens, depending on the selection of spectacle lens materials and the corresponding processes, can be subdivided into cast molding, injection molding, and other processes like rubber molding.

In "casting," generally hard resin spectacle lenses, such as thermosetting plastic, for example, allyl diglycol carbonate (e.g., CR39), are produced. The monomers of the resin are typically present in the form of a liquid of low viscosity. The casting formulation is then introduced into a tool mold or casting mold having e.g., two (glass) mold shells. An elastic spacer ring, gasket, is situated between said mold shells. The polymerization takes place for instance in the refrigerator/heating cabinet or in the water bath at temperatures of between 10 and 130 degrees Celsius. The outstanding mechanical loading capacity of this gasket allows the casting not only of finished products but also of semi-finished products, for example with a first surface (e.g., front surface) already shaped, the second surface (prescription surface; e.g., back surface) of which can be manufactured as desired by milling, grinding and polishing in the subsequent stages.

"Injection molding" is an efficient method for producing plastic finished spectacle lenses or semi-finished spectacle lenses in large numbers. In contrast to casting, the plastic (polymer) is already present in granulated form in the case of injection molding. Exemplary plastic materials are thermoplastics such as PMMA (polymethylmethacrylate), PC (polycarbonate), PA (Polyamide), and PS (polystyrene). The granules are melted in the injection cylinder, converted into a homogeneous melt, and injected into the corresponding tool mold at high pressure, which is typically made of steels, iron-nickel alloys, and tungsten alloys. After a short cooling phase, the spectacle lenses molded in this way attain a sufficient dimensional stability and can be removed from the tool mold.

Molding, including the molding process of casting and injection molding, is an efficient production technology for manufacturing spectacle lenses having complex and detailed geometries with high precision. Finished spectacle lenses or semi-finished spectacle blanks can be efficiently produced by molding. However, with the demanding requirements and sophisticated properties for the spectacle lenses, the molding process remains still challenging. Majority of finished spectacle lenses or semi-finished spectacle lenses require high optical quality and precisely controlled surface contours, which need a high control of the processing parameters and high-precision optical mold apparatus. In molding of spectacle lenses, various lens materials can be used, including optical materials, glasses, thermosetting hard resin, thermoplastic hard resin, photochromic materials, and/or photochromic fatigues described in DIN EN ISO 13666:2019-12. Preferably, spectacle lens materials can be made of thermosetting hard resins according to section 3.3.3 of DIN EN ISO 13666:2019-12; thermoplastic hard resins according to section 3.3.4 of DIN EN ISO 13666:2019-12; photochromic material according to section 3.3.5 of DIN EN ISO 13666:2019-12; or other suitable resins.

Especially during the molding process, form deviations of a spectacle lens can be caused due to residual stress attributed to molecular orientation and thermal residual stress resulted from shrinkage during the cooling stage. It has been demonstrated that molded spectacle lenses can achieve well-controlled surface contours and reduced residual stress by using appropriate mold apparatus. In this regard, conventionally for cast molding, the molds have been typically made of glass or metal, based on their high chemical resistance and low amount of geometric distortion they experience over time. On the other hand, the low distortion of glass or metal mold and the high shrinkage of monomer can cause excessive stress in between the spectacle lens and the mold surface. It may result in issues of early separation of spectacle lens, spectacle lens strain, and mold breakage during the process. Using a pair of glass or metal molds therefore may not result in exact sophisticated properties of a spectacle lens, and moreover, the process can be expensive. Furthermore, cleaning and reproducing glass or metal molds can be laborious and consuming. US 2004/0207105 A1 recognizes the problem where the lens made by using a mold assembly in which one mold portion or both molds is made from an amorphous material may have defects such as dimpling and warpage. Apparently, this invention aims to overcome the problem which attributes to using thermoplastic amorphous polymers for at least one mold element and solves the problem by altering the pathway by which radiation rays reach the mold element to be cured and controlling the relative intensity of radiation upon a particular portion of lens-forming material. However, this solution requires additional adjustment and incorporation of specific diffractive structure to the mold element, which is obviously complicated and time-consuming.

WO 2021/209497 recognizes said problem of glass molds and chose to mold a spectacle lens by a thermoset casting technique using a molding device where both mold shells are made of thermoplastic. Further, to improve the lens quality, WO 2021/209497 coats the thermoplastic mold shells with a reversed hard multi-coat stack so that it can be transferred to the spectacle lens surface. In order to solve the similar problem caused by using glass molds, WO 2006/055815 suggests a disposable mold for forming an ophthalmic lens comprising a substantially amorphous thermoplastic material forming an optically precise surface with a removable coating on the optically precise surface of the mold.

### SUMMARY

The present invention is directed to a molding apparatus configured to manufacture a spectacle lens comprising two mold elements, characterized in that one of the two mold elements is a plastic mold element, and the other mold element is a glass mold element or a metal mold element. The present invention is further directed to relevant methods such as manufacturing the instant molding apparatus and manufacturing a spectacle lens using the instant molding apparatus.

### BRIEF DESCRIPTION OF THE DRAWINGS

FIG. 1 illustrates a molding apparatus according to the present invention and a spectacle lens produced therefrom.
FIG. 2 is a schematic diagram of an exemplary method according to the present invention using the molding apparatus of FIG. 1 which is coated with a mold release agent.
FIG. 3 is a schematic diagram of an exemplary method according to the present invention using the molding apparatus of FIG. 1 which is produced via injection molding with a mixture of plastic and a mold release agent.
FIG. 4 is a schematic diagram of an exemplary method according to the present invention using the molding apparatus of FIG. 1 which is produced via cast molding with a mixture of thermosetting plastic and a mold release agent.
FIG.5 illustrates a molding apparatus according to the present invention using a supporting mold element.

### DETAILED DESCRIPTION

The inventors of the present invention found out that if both mold elements of the molding apparatus are made of thermoplastic as chosen by the prior art references, risk of lens distortion during the lens production significantly increases. This is because thermoplastic has low chemical resistance, high geometric distortion, and low heat resistance, and during the thermo-curing process the thermoplastic mold may deform given the poor capability to resist the stress generated from monomer shrinkage. This means that the thermoplastic mold elements at both sides of the spectacle lens to be produced provide weak mechanical performance and are prone to go through deformation, thereby failing to deliver the desired shape and surface contour of a spectacle lens.

Moreover, for the opening process of a mold apparatus after curing, unlike the glass or metal mold elements that can resist to the opening force, the force-resulted deformation of the spectacle lens helps itself to detach from the glass or metal mold elements. In a case where both mold elements are made of thermoplastic, the added opening force can distort both the thermoplastic mold elements and the produced spectacle lens, making the detachment significantly difficult. Furthermore, the spectacle lenses produced by using two thermoplastic mold elements are even more difficult to be cleanly and nicely separated from the thermoplastic mold elements due to the strong covalent bonding between the spectacle lens material and the thermoplastic mold elements, swelling of the thermoplastic mold elements, and penetration of the spectacle lens material into the thermoplastic mold elements.

The difficulties described above in opening of the mold apparatus and release of the produced spectacle lens mean that significantly larger opening force is required, which may result in damage to the produced spectacle lens and thermoplastic mold elements, and the damage leads to an unacceptable spectacle lens and non-reusable thermoplastic molds.

To solve the above problem, according to the first aspect of the present invention, a novel mold apparatus is provided. The mold apparatus configured to manufacture a spectacle lens according to the present invention comprises two mold elements, characterized in that one of the two mold elements is a plastic mold element, and the other mold element is a glass mold element or a metal mold element, more specifically, the present invention is directed to the mold apparatus according to claim 1.

The two mold elements of the mold apparatus together with means for connecting the two mold elements confine a form of a spectacle lens to be produced. The term "spectacle lens" is an ophthalmic lens, i.e., a lens intended to be used for purposes of measurement, correction, and/or protection of the eye, or for changing its appearance, worn in front of, but not in contact with, the eyeball (compare DIN EN ISO 13666:2019, sections 3.5.1 and 3.5.2). The term "spectacle lens" used in the present invention indicates finished spectacle lenses, semi-finished spectacle blanks (lens blank having only one optically finished surface), and lens blanks (piece of material, usually preformed, for the making of a lens at any stage before completion of the surfacing processes) as defined by DIN EN ISO 13666:2019 (section 3.8.1).

Molding in the present invention indicates a process of molding a spectacle lens material around two mold elements, which are pre-formed components, to create a spectacle lens. The term "molding," other than "injection molding," in context of the present invention indicates a molding process in casting of a spectacle lens, in other words, casting molding.

In a casting process, the spectacle lens material, for example, monomers of resins, is typically prepared to be present in a form of a liquid of low viscosity. A molding formulation where the monomers of resins present as a liquid of low viscosity, is introduced into a mold apparatus comprising two mold elements (shells) defining the contour of a spectacle lens. Means for connecting the two mold elements such as a gasket, a ring or a tape connects the two mold elements, and thus creates a cavity corresponding to the shape of a spectacle lens to be produced. The molding formulation is then filled into the cavity and thermal cure is applied, leading to the polymerization. Thereafter, the thus-produced spectacle lens is detached from the mold apparatus.

The spectacle lens material indicates a material suitable for manufacturing a spectacle lens and is not limited as long as the material is suitable for casting. Exemplary spectacle lens material can be thermoplastic or thermosetting plastic materials, preferably, thermosetting plastic materials. For example, polythiourethane resin having a refractive index of 1.60 (MR8), or a polythiourethane resin having a refractive index of 1.67(MR7, MR10), or allyl-diglycol-carbonate resin having a refractive index of 1.499 can be used. A full example set of optical materials suitable for lens casting process is listed in Table 1.

**Table 1: Examples of spectacle lens materials for casting**

| Trade name | Optical material | Average refractive index n_{D}* | Abbe number V_{D}* |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) | 1.500 | 56 |
| RAVolution | Polyurea / Polyurethane | 1.500 | 54 |
| Trivex | Polyurea / Polyurethane | 1.530 | 45 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectralite | Urethane /Methacrylate | 1.54 | |

| | | | |
|---|---|---|---|
| * Based on sodium D line | | | |

The plastic mold element according to the present invention is a mold element made of plastic. In a preferred embodiment, plastic can be thermoplastic and/or thermosetting materials, either transparent or opaque. The term "thermoplastic" referred to any plastic polymer material that becomes moldable at a certain elevated temperature and solidifies upon cooling. The term "thermosetting plastic" refers to any polymeric low viscosity monomer that becomes insoluble and non-melting at a certain elevated temperature and solidifies upon cooling.

The thermoplastic is not limited thereto but can be selected from the group consisting of polycarbonate, polyamide, polysulfone, polyester, polyetheretherketone (PEEK), polyolefins, cyclic olefin copolymer (COC), cyclic olefin polymer (COP), and cyclic block copolymer (CBC). Preferably, the thermoplastic is selected from at least one group consisting of polycarbonate, polyamide, polysulfone, polyester, and polyetheretherketone (PEEK). The thermosetting plastic is not limited thereto but can be selected from the group consisting of polythiourethane, polyurethane, methacrylate, polyepisulfide, and polyallyldiglycol carbonate.

It is required that the surface of the plastic mold element presents characteristics of low water uptake, solvent resistance, swelling resistance and low chemical reactivity for easy removal of the plastic mold from the adjacent surface of the spectacle lens.

Plastic used for the plastic mold element, preferably, has no residual chemical functional groups which can avoid ionic or covalent bonding formed by the chemical reaction between the functional groups of the plastic mold surface and the casted monomers of the produced spectacle lens. In one embodiment, these functional groups are selected from the group consisting of C=C, -COOH, -OH, -CONH₂, -SH, - CO-, -COH, -SO₃H and -NH₂.

The plastic used as the plastic mold element preferably has a water or solvent uptake by weight in a range from 0 to 0.5%, more preferably in a range from 0 to 0.1%, mostly preferably in a range from 0% to 0.01%. 0% water or solvent uptake means that the plastic does not uptake water or solvent at all. The lower of the water or solvent uptake, the less tendency of swelling will occur. The term "uptake" refers to the maximum capability of the material absorbing water or solvent in a rich environment of water or solvent.

The glass mold element according to the present invention is a mold element made of glass. "Glass" is a non-crystalline, often transparent amorphous solid formed from a melt by cooling to rigidity without crystallization.

The metal mold element according to the present invention is a mold element made of metals. For example, metals like steels, iron-nickel alloys, and tungsten alloys can be used.

By configuring one of the mold elements to be made of plastic and the other mold element to be made of glass or metal, the present invention overcomes both problems attribute to mold apparatus using two thermoplastic mold elements as well as mold apparatus using two glass mold elements or two metal mold elements. During the molding process in the process of casting of the present invention, the glass or metal mold element ensures minimum deformation of the spectacle lens shape on the one side of the spectacle lens given its rigidity and strong mechanical performance, while the plastic mold element tends to deform to release the curing strain, thereby allowing the glass or metal mold element on the other side to deform even less compared to the conventional mold apparatus using two glass mold elements or two metal mold elements. Hence for the glass or metal mold element side of the spectacle lens, a more accurate surface contour can be replicated. Moreover, the deformation of plastic mold element helps the spectacle lens to be affected by the minimum level of strain. As the level of deformation is controlled by the level of monomer shrinkage, which is a fixed value for a given spectacle lens material, the desired lens shape on the other side of the lens can also be achieved much more stably. When both mold elements are made of thermoplastic as in the prior art, there will be excessive shrinking and deformation of mold elements during molding, and thus it would be difficult to predict or control the final spectacle lens shape. It turned out that by using a plastic mold element in combination with a glass or metal mold element, significantly well-controlled surface contours and reduced residual stress can be achieved.

On the other hand, by using one plastic mold element, the present mold apparatus can easily and precisely design the spectacle lens contour and surface geometry and at the same time save cost and time for manufacturing the molds. As well known, glass molds are difficult to be fabricated to exacting standards and with complicated design, and metal molds are not cost and time effective for mass fabrication. Nonetheless, the glass or metal mold element of the present invention can provide the mechanical support during molding process, resulting in a spectacle lens with precisely desired surface contour and geometries when used in combination with the plastic mold element. The glass or metal mold element of the present invention delegates the complicated surface lens contour and geometry to the plastic mold element. The very combination of (i) the glass or metal mold element and (ii) the plastic mold element provides optimal molding of a spectacle lens, even with microstructures on the spectacle lens surface, which overcomes the problems of glass mold apparatus, metal mold apparatus as well as plastic mold apparatus.

Preferably, microstructures can be formed either on the concave or the convex surface of the plastic mold elements. The microstructure serves in particular as a diffractive grating for visible light, preferably for color fringe correction in a spectacle lens.

In a preferred embodiment, a front surface of a spectacle lens is formed by the plastic mold element and a back surface of a spectacle lens is formed by the glass mold element or the metal mold element. The term "front surface" refers to surface of the lens intended to be fitted away from the eye according to section 3.2.13 of DIN EN ISO 13666:2019(E) and the term "back surface" refers to surface of the lens intended to be fitted nearer to the eye according to section 3.2.14 of DIN EN ISO 13666:2019(E).

The mold apparatus of the present invention is particularly suitable for manufacturing microstructured spectacle lenses. In one embodiment, the plastic mold element according to the present invention is configured to provide microstructures on a surface, preferably a front surface, of the spectacle lens to be manufactured. These microstructures on the surface of the plastic mold element correspond to the negative pattern of the microstructure to be formed on or in the spectacle lens to be manufactured. In this regard, the plastic mold element according to the present invention comprises microstructures formed in relief.

For this, in one embodiment, the plastic mold element can be manufactured by injection molding so that the negative pattern of the microstructures is formed on the surface or by directly micromachining the negative pattern of the microstructures on a plastic mold element. Injection molding would be suitable for mass production of the plastic mold elements with microstructures and also cost effective as injection molding is friendly for microstructure replication. Injection molding is a method particularly preferable for manufacturing a thermoplastic mold element in large numbers.

In another embodiment, plastic mold element can be made by a standard spectacle lens casting process with a glass mold apparatus or a metal mold apparatus. Using a glass mold apparatus would be preferable as a glass mold apparatus is particularly suitable for making a thermosetting plastic mold element in large numbers. In the case where there is a need to form complicated and delicate microstructures on the plastic mold element in relief by casting molding process, using a metal mold apparatus is recommended as microstructure can be created on the metal mold by precision machining. Therefore, in one embodiment where a plastic mold element with microstructures is produced by casting process, a metal mold apparatus is used for prod.

In the present apparatus, microstructures (which can be also referred to as microlenses) can be formed on the plastic mold element. The plastic mold element is preferred for microstructures because fabrication of glass mold elements with delicate and complicated microstructures on the surface may not be accurately and precisely done. Further, while metal mold elements are able to deliver delicate and complicated microstructures, it is not recommended as mass production of the metal mold elements can be extremely time and cost consuming. In particular, in case where a plastic mold element needs to be produced with microstructures in relief on the surface, it is preferred that the plastic mold element is produced by injection molding for the reasons indicated above.

To reduce the efforts in mold opening, in one embodiment of the present invention, a mold release agent can be used for the plastic mold element. Mold release agents provide low surface tension to the plastic mold element by forming a non-reactive barrier (anti-stick) to the spectacle lens materials, thereby leading to high quality of the produced spectacle lenses.

In one embodiment, the plastic mold element is coated with a mold release agent comprising at least one selected from the group consisting of aliphatic hydrocarbon, fluorocarbon, silicate, silicon oil, wax, and a long-chain alkyl derivative. The coating technic can be any conventional means, for example, dip-coating, spray coating, wiping or other surface treatment methods. In one embodiment, a plastic mold element can be dip-coated in a mold release agent to form a thin coating that reduces intermolecular interactions between the two surfaces in contact or preventing such close contact of the two surfaces. Said thin coating is preferably a temporary coating but not a permanent one, and thus does not cause imperfections in the mold surface or inhibit the curing of the spectacle lens material.

Preferably, the coating of the mold release agent is configured to be thin as long as good lens separation performance can be achieved. In a preferred embodiment, the thin coating of the mold release agent formed on the plastic mold element surface is in a thickness less than 2 µm, more preferably less than 1 µm, and mostly preferably less than 0.5 µm. Thickness higher than 2 µm may still provide an acceptable separation performance but could result in unfavorable surface defects like stains, bubbles, pinholes and other issues like early spectacle lens separation.

In this embodiment, mold release agents are external (or non-permanent) and tend to form a thin coating on the surface. The external release agents are not limited there to but may comprise at least one selected from the group consisting of aliphatic hydrocarbon, fluorocarbon, wax, and a long-chain alkyl derivative.

Aliphatic hydrocarbons that are hydrocarbons based on chains of C atoms such as alkanes, alkenes, alkynes, cycloalkanes. Fluorocarbons that are chemical compounds with carbon-fluorine bonds, e.g., polytetrafluoroethylene, polyvinylidene fluoride, fluorinated ethylene propylene, preferably, water-based fluorocarbons. Wax comprised in a mold release agent is not limited thereto but can be stearamide wax, paraffin waxes and hydrocarbon waxes, oxidized Fischer-Tropsch waxes, and polyethylene waxes. The long-chain alkyl derivatives can be C₁₀-C₅₀ alkyl derivatives, preferably, C₁₅-C₄₀ alkyl derivatives, for example, cetyl palmitate, methyl behenate, and 9-octadecenamide.

In a preferred embodiment, the mold release agent comprises fluorocarbon, more preferably, water-based fluorocarbon. For example, a fluorocarbon-based mold release agent DAIKIN GW-4000 is diluted in distilled water for coating the thermoplastic mold element. It was found that fluorocarbon-based mold release agent provides very thin coating which do not affect the mold surface and leads to cleaner mold surfaces, and thus is suitable for casting process where a plastic mold element is used. By diluting the release agent with water or other proper solvents, it provides further advantage of well controlling the thickness of the coating and the surface tension to make it compatible with various plastic mold elements and spectacle lens materials.

It is preferable that a mold release agent has low surface tension to achieve a slip surface. The corresponding surface energy is preferably less than 40 mN/m (Dyne), more preferably, less than 30 mN/m (Dyne).

In another embodiment where the mold release agent is added to the formulation for forming the plastic mold element, the mold release agent tends to reduce the bonding between the plastic mold element and the spectacle lens material. Here, this internal mold release agent may comprise at least one selected from the group consisting of ester of fatty acid, silicone oil, phosphate ester compound, and erucamide. Ester of fatty acid is not limited that to but can be caprates, caprylates, laurates, myristates oleates, palmitates, stearates, linoleates and/or linolenates. Phosphate ester compound is not limited there to but can be a phosphoric monoester and/or a phosphoric diester, which optionally contains an alkyl chain, an oxyethylene chain, or the like.

In this embodiment, the formulation for forming the plastic mold element can be formed by mixing plastic pellets and an internal mold release agent. The internal mold release agent, for example, ZELEC^{®} UN, has the similar functions as the external mold release agent used for the coating of the plastic mold element to reduce the pull force of mold opening.

Preferably, the ratio of the internal mold release agent to plastic is less than 2% by weight, preferably less than 1%, and more preferably less than 0.5%. In the case where excessive release agent is used, the smooth surface of the mold element may not be achieved, meaning that the surface may suffer from contaminations like stains, air bubbles, pinholes, or causes other issues like early spectacle lens separation.

In another embodiment, the plastic mold is made from a standard lens casting process. The mold element comprises an internal mold release agent and the ratio of the internal mold release agent to monomer is less than 1% by weight, preferably less than 0,5%, and more preferably less than 0.1%. In a case where excessive release agent is used, the spectacle lens surface may suffer from defects like stains, bubbles, pinholes, or causes other issues like early spectacle lens separation.

In a further embodiment, the plastic mold element can be formed by mixing plastic and/or monomer with an internal mold release agent and further coating the produced plastic mold element with an external mold release agent.

Compared to the prior art reference using a hard multi-coat comprising several material layers optionally capped by a top-coat film such as anti-scratch coatings, anti-reflection coatings and produced by using materials such as indium tin oxide, etc., the plastic mold element of the present invention comprising a mold release agent provides excellent effect in reducing the close and direct contact between the mold element and the spectacle lens material, greatly eases the difficulties in opening of the mold apparatus, and minimizes the possibility of damage when used in combination with a glass or metal mold element. The hard muti-coat is considered to have no effect in reducing the adhesion force of the two surfaces between mold element and the spectacle lens material.

Most commonly, two mold elements form a volume together with means for connecting the two mold elements, which are not limited thereto but can be realized as a gasket or a tape or a ring. The volume defines the dimensions and surface geometry of the spectacle lens to be molded. By the means for connecting the two mold elements, two mold elements are held in separation and spaced apart in a predetermined axial distance from one another. In one embodiment, the mold apparatus comprises a gasket or a tape or a ring configured to hold two mold elements in separation. In a preferred embodiment, the mold apparatus comprises a tape. The physical property of the tape is preferably to provide a good mechanical strength that can slightly resist the deformation of the plastic mold element, the mild stress in the adjacent surface will not impact the spectacle lens surface contour but make it easier to separate the cured spectacle lens from the mold elements.

In one embodiment, the molding apparatus of the present invention further comprises a mold element supporting the plastic mold element.

More serious defect than the deformation has been observed in thermo-curing process where the curing temperature is equal to or higher than the glass transition temperature (Tg) of the thermoplastic material of the mold element. The term "glass transition temperature" refers to the temperature below which completely or partially amorphous polymers are in a glassy or hard-elastic, brittle state and above which they are in a highly viscous or rubber-elastic state. The glass transition temperature can be determined by Differential Scanning Calorimetry (ISO 11357-2:2020(E) or dynamic mechanical analysis. In such a case, the molding apparatus consisting of two thermoplastic mold elements would fall apart, leading to monomer leakage making the process incapable to deliver a completed lens. Therefore, for the molding apparatus used for the curing process where curing temperature of a spectacle lens is equal to or higher than the plastic mold element, a mold element supporting the plastic mold element is further added to the mold apparatus to resist the deformation of the plastic mold element and to ensure the integrity of the mold apparatus. The mold element supporting the plastic mold element is added to the posterior side of the plastic mold element (the surface which does not form the spectacle lens). Preferably, one side of the mold element supporting the plastic mold element would have a shape and curvature matching a posterior surface of the plastic mold element to seamlessly bind up with the plastic mold element.

The supporting mold element according to the present invention is a mold element made of glass or metal that is capable of resisting deformation under high curing temperature.

The second aspect of the present invention is directed to a method comprising a step of producing a mold apparatus comprising two mold elements configured to manufacture a spectacle lens, wherein the method comprises providing two mold elements, characterized in that one of the two mold elements is a plastic mold element, and the other is a glass mold element or a metal mold element, more specifically, the method according to claim 8.

In one embodiment, the method of the present invention further comprises fabricating the plastic mold element by molding where microstructures are formed in relief on the surface of the plastic mold element. In a preferred embodiment, the plastic mold element is formed by injection molding or cast molding. By using both molding processes for producing a plastic mold element, cost effective and efficient mass production of mold elements is enabled. As explained in respect to the mold apparatus according to the first aspect of the present invention, the microstructures formed on the surface of the plastic mold element correspond to the negative pattern of the microstructures to be formed on or in the spectacle lens to be manufactured. In a case where the plastic mold element is formed with microstructures in relief, cast molding using a metal mold apparatus or injection molding if preferred for the production of the plastic mold element.

The present method further comprises a step of applying an external mold release agent on a surface of the plastic mold element and/or fabricating the plastic mold element containing an internal mold release agent through injection molding or cast molding. The plastic mold element is made of plastic materials, preferably, thermoplastic materials and/or thermosetting plastic. The plastic materials are not limited thereto but can be made of at least one selected from the group consisting of polycarbonate, polyamide, polysulfone, polyester, polyetheretherketone (PEEK), polyolefins, cyclic olefin copolymer (COC), cyclic olefin polymer (COP), cyclic block copolymer (CBC), polythiourethane, polyurethane, methacrylate, polyepisulfide, and polyallyldiglycol carbonate. Preferably, the plastic material is at least one selected form the group consisting of polycarbonate, polyamide, polysulfone, polyester, polyetheretherketone (PEEK), polythiourethane, polyurethane, methacrylate, polyepisulfide, and polyallyldiglycol carbonate.

In this regard, the external mold release agent comprises at least one selected from the group consisting of aliphatic hydrocarbon, fluorocarbon, wax and a long-chain alkyl derivative; and the internal mold release agent comprises at least one selected from the group consisting of ester of fatty acid, silicone oil, phosphate ester compound, and erucamide. The method according to the present invention may comprise a step of manufacturing a spectacle lens by molding using the thus-produced mold apparatus.

The present method further comprises providing a means for connecting the two mold elements, which are not limited thereto, but can be a gasket or a tape or a ring.

In one embodiment, the mold apparatus according to the present method may further comprises an additional mold element supporting the plastic mold element. In such a case, the present method further comprises providing a mold element supporting the plastic mold element to the mold apparatus. The mold element supporting the plastic mold element is provided to the posterior surface of the plastic mold element and/or can be configured to match the shape and contour of the posterior surface of the plastic mold element. The method may further comprise providing a means for connecting the plastic mold element and the mold element supporting the plastic mold element.

The third aspect of the present invention provides a method configured to manufacture a spectacle lens using a mold apparatus comprising two mold elements, characterized in that one of the two mold elements is a plastic mold element, and the other is a glass mold element or a metal mold element, more specifically, the method according to claim 9.

The method according to the third aspect may further comprise providing a spectacle lens material into the mold apparatus and/or curing the spectacle lens material. If the spectacle lens material is a thermoplastic spectacle lens material and the curing temperature is equal to higher than the glass transition temperature of the thermoplastic spectacle lens material, the method further comprises providing an additional mold element supporting the plastic mold element to the mold apparatus.

The method may further comprise providing a means for connecting the plastic mold element and the mold element supporting the plastic mold element to the mold apparatus. The means for connecting the mold elements, can be, but not limited thereto, a gasket or a tape or a ring.

All the relevant features and descriptions made in respect to the mold apparatus according to the first and second aspect of the present invention can be also applied to the methods of the present invention according to the second and third aspects.

These and other embodiments are discussed below with reference to the figures, however, those skilled in the art will readily appreciate that the detailed description given herein with respect to these figures is for explanatory purposes only and should not be construed as limiting.

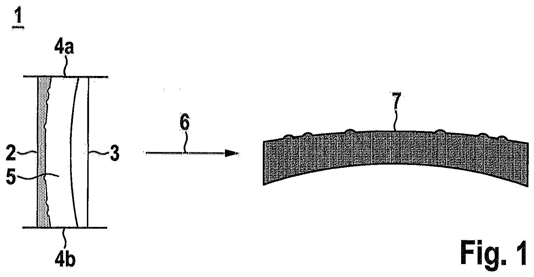

FIG. 1 shows a molding apparatus 1 according to the present invention and a spectacle lens 5 produced therefrom. The mold apparatus comprises two mold elements, one is a plastic mold element 2 and the other is a glass mold element 3. Further, the mold element comprises means 4a, 4b for connecting the two mold elements such as a gasket or a ring or a tape, preferably a tape. The two mold elements 2, 3 form a cavity 5 which defines the shape and surface contour of a spectacle lens to be produced together with the means 4a, 4b for connecting the two mold elements. The spectacle lens material 6 is injected into the cavity 5 of the mold apparatus 1, thereby producing a spectacle lens 7 by casting.

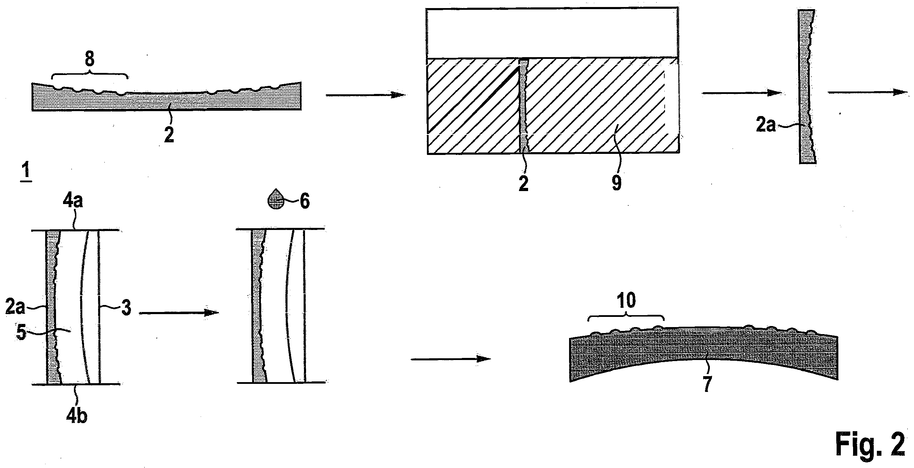

FIG. 2 shows one exemplary example of the method according to the present invention. First, here, a plastic mold element 2 with microstructures 8 on a concave surface is manufactured by injection molding. The microstructures 8 are configured to provide a negative pattern of the microstructures to be formed on or in the spectacle lens 7 to be manufactured. Here, the plastic mold element 2 has microstructures 8 formed in relief. The surface of the plastic mold element 2 with microstructures 8 is treated by dip-coating in a mold release agent 9, which is an external mold release agent. The coated plastic mold element 2a exhibits low surface tension enabling a spectacle lens material 6 to be more easily released at the later stage. The coated plastic mold element 2a and a glass mold element 3 together with the means for connecting 4a, 4b the two mold elements form a mold apparatus 1 having a confined space, a cavity 5, corresponding to the shape and contour of the spectacle lens 7 to be formed. A spectacle lens material 6 is injected to the cavity 5, thermally cured, and the spectacle lens 7 with microstructures 10 on the surface is produced. Since the plastic mold element 2a is surface treated by the mold release agent 5, the produced spectacle lens 7 is well separated from the mold apparatus without any damages done to the spectacle lens 7. As the plastic mold element is manufactured by injection molding, it is preferable that the plastic mold element is a thermoplastic mold element and accordingly, thermosetting plastic spectacle lens material can be used for the spectacle lens.

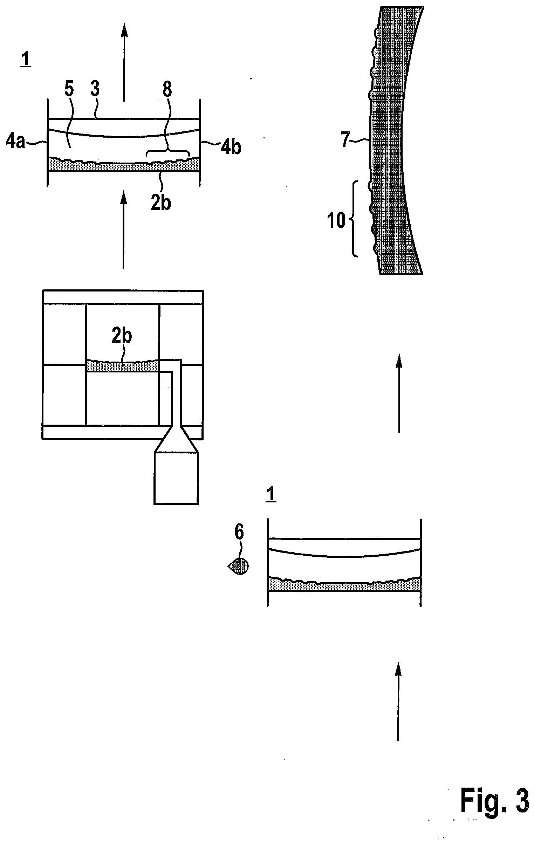

FIG. 3 illustrates another exemplary example of the method according to the present invention. Here, unlike the exemplary example depicted in FIG. 2, a plastic mold element 2b is formed by injection molding of a mixture of plastic pellets and a mold release material (not shown), which is an internal mold release material. After the plastic material for the plastic mold element 2b is injected into the cavity of the mold apparatus for manufacturing the plastic mold element 2b, it is cooled down and ejected from the mold apparatus. By the injection molding, the plastic mold element 2b is configured to have the required microstructures 8 with a negative pattern of the microstructures 10 to be formed on or in the spectacle lens 7. That is, the plastic mold element 2b has microstructures in relief on its surface. The plastic mold element 2b, a glass mold element 3, and the means 4a, 4b for connecting the two mold elements form a cavity 5 corresponding to the shape and contour of the spectacle lens 7 to be produced. The spectacle lens material 6 is inserted into the cavity 5, thermally cured, and ejected from the mold apparatus 1, and the spectacle lens 7 with microstructures 10 on the surface is formed by cast molding. With the improved properties exhibited by the mold release agent mixed into the plastic mold element 2b, the spectacle lens 7 can be easily and smoothly released without significant constraint and harming of the contour or the geometry thereof. As the plastic mold element is manufactured by injection molding, it is preferable that the plastic mold element is a thermoplastic mold element and accordingly, thermosetting plastic spectacle lens material can be used for the spectacle lens.

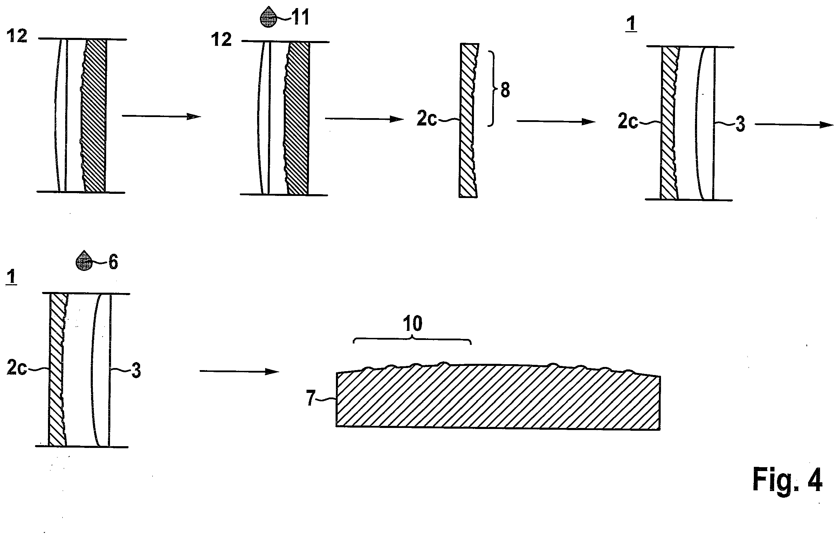

FIG. 4 illustrates a third exemplary example of the method according to the present invention. Here, unlike the exemplary example depicted in FIG. 3, a plastic mold element 2c is formed by casting of a mixture of plastic monomer formulation and a mold release agent 11, an internal mold release agent. After the mixture 11 for the plastic mold element 11 is filled into the cavity of a metal mold apparatus 12 for manufacturing the plastic mold element 2c, it is cooled down and released from the metal mold apparatus 12. Metal mold apparatus 12 is preferred for casting the plastic mold element 2c with microstructures 8. By the casting, the plastic mold element 2c is configured to have the required microstructures 8 with a negative pattern of the microstructures 10 to be formed on or in the spectacle lens 7. That is, the plastic mold element 2c has microstructures 8 in relief on its surface. When the plastic mold element 2c is manufactured by casting, it is preferable that the plastic mold element 2c is a thermosetting plastic mold element. After producing the plastic mold element 2c, the plastic mold element 2c together with the glass mold element 3 forms a mold apparatus 1 according to the present invention and a spectacle lens 7 with microstructures 10 is produced.

Other variations not shown in the figures may also be embodied. For example, while FIGs 1 to 4 above are directed to the embodiments where microstructures on the concave surface of a plastic mold element can be provided to produce a spectacle lens with microstructures on the convex surface, microstructures on the convex surface of a plastic mold element can be provided to produce a spectacle lens with microstructures on the concave surface. Another example would be that although the two embodiments in FIGs 2 and 3 are described as using a plastic mold element made by injection molding, it is also possible to fabricate a plastic mold element by direct micromachining. Additionally, FIGs 1 to 4 where the glass mold element 3 can be replaced with a metal mold element.

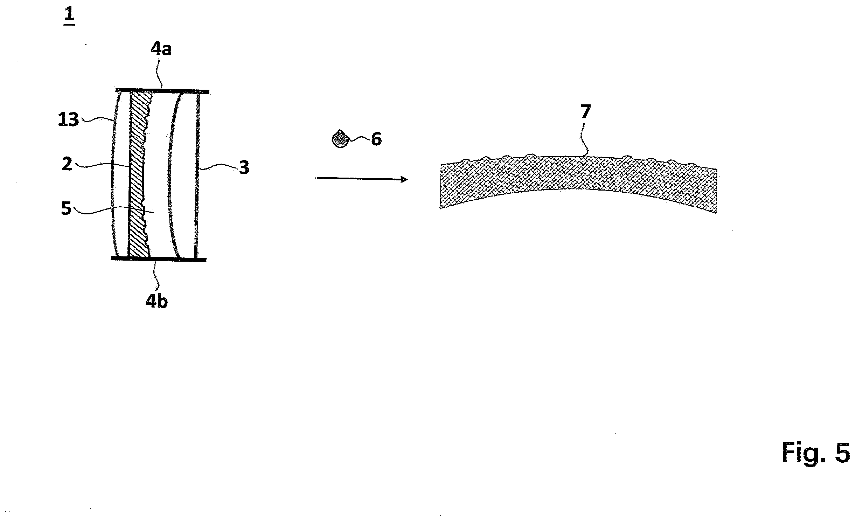

FIG. 5 illustrates a fourth exemplary example of the present invention. Here, unlike the exemplary example depicted in FIGs. 1 to 4, a mold element supporting the plastic mold element 13 is included as a part of the mold apparatus assembled by a gasket or tape or a ring. The mold element supporting the plastic mold element 13 is made of glass and has the surface and contour matching the posterior surface of the plastic mold element 2. The mold element 13 is added to the posterior side of the plastic mold element 2. During the spectacle lens curing step, the mold element 13 stands against the tendency of deformation of the plastic mold element 2 and ensures the integrity of mold apparatus 1 and the desired shape of the spectacle lens 7.

## Claims

1. A mold apparatus (1) configured to manufacture a spectacle lens (7) comprising two mold elements (2, 3), wherein one of the two mold elements is a plastic mold element (2) which is configured to determine a front surface of the spectacle lens (7) and the other mold element is a glass mold element or a metal mold element (3) which is configured to determine a back surface of the spectacle lens (7), and **characterized in that** the mold apparatus (1) further comprises a mold element (13) supporting the plastic mold element (2), wherein the mold element (13) supporting the plastic mold element (2) is made of glass and has a surface matching the back surface of the plastic mold element (2).

2. The mold apparatus (1) according to Claim 1, **characterized in that** the other mold element is a metal mold element.

3. The mold apparatus (1) according to Claim 1 or 2, **characterized in that** the plastic mold element (2) comprises a mold release agent (9) and/or
is coated with a mold release agent (9).

4. The mold apparatus (1) according to any one of Claims 1 to 3, **characterized in that** the plastic mold element (2b) is formed by mixing plastic material and a mold release agent through injection molding or casting.

5. The mold apparatus (1) according to Claim 3, **characterized in that** the mold release agent (9) comprises at least one selected from the group consisting of aliphatic hydrocarbon, fluorocarbon, wax and a long-chain alkyl derivative.

6. The mold apparatus (1) according to Claim 4, **characterized in that** the mold release agent comprises at least one selected from the group consisting of ester of fatty acid, silicone oil, phosphate ester compound, and erucamide.

7. The mold apparatus (1) according to any one of the preceding claims, **characterized in that** the plastic mold element (2) comprises microstructures (8) in relief on a surface of the plastic mold element (2).

8. A method configured to manufacture a spectacle lens (7) using a mold apparatus (1) comprising two mold elements (2, 3), wherein one of the two mold elements is a plastic mold element (2) which is configured to determine a front surface of the spectacle lens (7) and the other mold element is a glass mold element or a metal mold element (3) which is configured to determine a back surface of the spectacle lens (7), **characterized in that** the mold apparatus (1) further comprises a mold element (13) supporting the plastic mold element (2), wherein the mold element (13) supporting the plastic mold element (2) is made of glass and has a surface matching the back surface of the plastic mold element (2).

9. A method configured to manufacture a mold apparatus (1) comprising two mold elements (2, 3) configured to manufacture a spectacle lens, wherein the method comprises providing two mold elements, wherein one of the two mold elements is a plastic mold element (2) which is configured to determine a front surface of the spectacle lens (7) and the other mold element is a glass mold element or a metal mold element (3) which is configured to determine a back surface of the spectacle lens (7), **characterized in that** the mold apparatus (1) further comprises a mold element (13) supporting the plastic mold element (2), wherein the mold element (13) supporting the plastic mold element (2) is made of glass and has a surface matching the back surface of the plastic mold element (2).

10. The method according to Claim 8 or 9, **characterized in that** the other mold element is a metal mold element.

11. The method according to Claim 9 or 10, **characterized by** further comprising a step of injection molding or cast molding of the plastic mold element (2).

12. The method according to Claim 11, **characterized in that** in a step of injection molding, the plastic mold element (2) is a thermoplastic mold element comprising microstructures (8) formed in relief on the surface of the plastic mold element (2).

13. The method according to any one of Claims 8 to 12, **characterized by** further comprising a step of coating a mold release agent (9) on a surface of the plastic mold element (2) and/or a step of fabricating the plastic mold element (2) by injection molding or cast molding a mixture of plastic and a mold release agent.

14. The method according to Claim 13, **characterized in that** the mold release agent (9) for the step of coating comprises at least one selected from the group consisting of aliphatic hydrocarbon, fluorocarbon, wax and a long-chain alkyl derivative.

15. The method according to Claim 13, **characterized in that** the mold release agent for the step of injection molding or casting comprises at least one selected from the group consisting of ester of fatty acid, silicone oil, phosphate ester compound, and erucamide.

## Patentansprüche

1. Formvorrichtung (1), ausgelegt zum Fertigen eines Brillenglases (7), umfassend zwei Formelemente (2, 3),
wobei eines der beiden Formelemente ein Kunststoffformelement (2) ist, dazu ausgelegt, eine Vorderfläche des Brillenglases (7) zu bestimmen, und das andere Formelement ein Glasformelement oder ein Metallformelement (3) ist, dazu ausgelegt, eine Rückfläche des Brillenglases (7) zu bestimmen, und
**dadurch gekennzeichnet, dass** die Formvorrichtung (1) ferner ein Formelement (13) umfasst, das das Kunststoffformelement (2) trägt, wobei das Formelement (13), das das Kunststoffformelement (2) trägt, aus Glas gefertigt ist und eine Oberfläche aufweist, die der Rückfläche des Kunststoffformelements (2) entspricht.

2. Formvorrichtung (1) nach Anspruch 1, **dadurch gekennzeichnet, dass** das andere Formelement ein Metallformelement ist.

3. Formvorrichtung (1) nach Anspruch 1 oder 2, **dadurch gekennzeichnet, dass** das Kunststoffformelement (2) ein Formtrennmittel (9) umfasst und/oder mit einem Formtrennmittel (9) beschichtet ist.

4. Formvorrichtung (1) nach einem der Ansprüche 1 bis 3, **dadurch gekennzeichnet, dass** das Kunststoffformelement (2b) durch Mischen von Kunststoffmaterial und einem Formtrennmittel mittels Spritzgießen oder Gießen ausgebildet wird.

5. Formvorrichtung (1) nach Anspruch 3, **dadurch gekennzeichnet, dass** das Formtrennmittel (9) mindestens eines umfasst, ausgewählt aus der Gruppe bestehend aus aliphatischem Kohlenwasserstoff, Fluorkohlenwasserstoff, Wachs und einem langkettigen Alkylderivat.

6. Formvorrichtung (1) nach Anspruch 4, **dadurch gekennzeichnet, dass** das Formtrennmittel mindestens eines umfasst, ausgewählt aus der Gruppe bestehend aus Fettsäureester, Silikonöl, Phosphatesterverbindung und Erucamid.

7. Formvorrichtung (1) nach einem der vorhergehenden Ansprüche,
**dadurch gekennzeichnet, dass** das Kunststoffformelement (2) Mikrostrukturen (8) in Reliefform auf einer Oberfläche des Kunststoffformelements (2) umfasst.

8. Verfahren, ausgelegt zum Fertigen eines Brillenglases (7) unter Einsatz einer Formvorrichtung (1), umfassend zwei Formelemente (2, 3),
wobei eines der beiden Formelemente ein Kunststoffformelement (2) ist, dazu ausgelegt, eine Vorderfläche des Brillenglases (7) zu bestimmen, und das andere Formelement ein Glasformelement oder ein Metallformelement (3) ist, dazu ausgelegt, eine Rückfläche des Brillenglases (7) zu bestimmen,
**dadurch gekennzeichnet, dass** die Formvorrichtung (1) ferner ein Formelement (13) umfasst, das das Kunststoffformelement (2) trägt, wobei das Formelement (13), das das Kunststoffformelement (2) trägt, aus Glas gefertigt ist und eine Oberfläche aufweist, die der Rückfläche des Kunststoffformelements (2) entspricht.

9. Verfahren, ausgelegt zum Fertigen einer Formvorrichtung (1), umfassend zwei Formelemente (2, 3), ausgelegt zum Fertigen eines Brillenglases, wobei das Verfahren das Bereitstellen von zwei Formelementen umfasst,
wobei eines der beiden Formelemente ein Kunststoffformelement (2) ist, dazu ausgelegt, eine Vorderfläche des Brillenglases (7) zu bestimmen, und das andere Formelement ein Glasformelement oder ein Metallformelement (3) ist, dazu ausgelegt, eine Rückfläche des Brillenglases (7) zu bestimmen,
**dadurch gekennzeichnet, dass** die Formvorrichtung (1) ferner ein Formelement (13) umfasst, das das Kunststoffformelement (2) trägt, wobei das Formelement (13), das das Kunststoffformelement (2) trägt, aus Glas gefertigt ist und eine Oberfläche aufweist, die der Rückfläche des Kunststoffformelements (2) entspricht.

10. Verfahren nach Anspruch 8 oder 9, **dadurch gekennzeichnet, dass** das andere Formelement ein Metallformelement ist.

11. Verfahren nach Anspruch 9 oder 10, **dadurch gekennzeichnet, dass** es ferner einen Schritt des Spritzgießens oder Formgießens des Kunststoffformelements (2) umfasst.

12. Verfahren nach Anspruch 11, **dadurch gekennzeichnet, dass** in einem Schritt des Spritzgießens das Kunststoffformelement (2) ein thermoplastisches Formelement ist, umfassend in Reliefform auf der Oberfläche des Kunststoffformelements (2) ausgebildete Mikrostrukturen (8).

13. Verfahren nach einem der Ansprüche 8 bis 12, **dadurch gekennzeichnet, dass** es ferner einen Schritt des Beschichtens einer Oberfläche des Kunststoffformelements (2) mit einem Formtrennmittel (9) und/oder einen Schritt des Erzeugens des Kunststoffformelements (2) durch Spritzgießen oder Formgießen einer Mischung aus Kunststoff und Formtrennmittel umfasst.

14. Verfahren nach Anspruch 13, **dadurch gekennzeichnet, dass** das Formtrennmittel (9) für den Schritt des Beschichtens mindestens eines umfasst, ausgewählt aus der Gruppe bestehend aus aliphatischem Kohlenwasserstoff, Fluorkohlenwasserstoff, Wachs und einem langkettigen Alkylderivat.

15. Verfahren nach Anspruch 13, **dadurch gekennzeichnet, dass** das Formtrennmittel für den Schritt des Spritzgießens oder des Gießens mindestens eines umfasst, ausgewählt aus der Gruppe bestehend aus Fettsäureester, Silikonöl, Phosphatesterverbindung und Erucamid.

## Revendications

1. Appareil de moulage (1) configuré pour fabriquer un verre de lunettes (7) comportant deux éléments de moule (2, 3),
un des deux éléments de moule étant un élément de moule en plastique (2) qui est configuré pour déterminer une surface avant du verre de lunettes (7) et l'autre élément de moule étant un élément de moule en verre ou un élément de moule métallique (3) qui est configuré pour déterminer une surface arrière du verre de lunettes (7),
et **caractérisé en ce que** l'appareil de moulage (1) comprend en outre un élément de moule (13) supportant l'élément de moule en plastique (2), l'élément de moule (13) supportant l'élément de moule en plastique (2) étant en verre et ayant une surface adaptée à la surface arrière de l'élément de moule en plastique (2).

2. Appareil de moulage (1) selon la revendication 1, **caractérisé en ce que** l'autre élément de moule est un élément de moule métallique.

3. Appareil de moulage (1) selon la revendication 1 ou 2, **caractérisé en ce que** l'élément de moule en plastique (2) comprend un agent de démoulage (9) et/ou est revêtu d'un agent de démoulage (9).

4. Appareil de moulage (1) selon l'une quelconque des revendications 1 à 3, **caractérisé en ce que** l'élément de moule en plastique (2b) est formé par mélange de matière plastique et d'un agent de démoulage par moulage par injection ou coulée.

5. Appareil de moulage (1) selon la revendication 3, **caractérisé en ce que** l'agent de démoulage (9) comprend au moins un élément choisi dans le groupe constitué d'un hydrocarbure aliphatique, d'un fluorocarbone, d'une cire et d'un dérivé d'alkyle à longue chaîne.

6. Appareil de moulage (1) selon la revendication 4, **caractérisé en ce que** l'agent de démoulage comprend au moins un élément choisi dans le groupe constitué d'un ester d'acide gras, d'une huile de silicone, d'un composé ester de phosphate et d'un érucamide.

7. Appareil de moulage (1) selon l'une quelconque des revendications précédentes, **caractérisé en ce que** l'élément de moule en plastique (2) comprend des microstructures (8) en relief sur une surface de l'élément de moule en plastique (2).

8. Procédé configuré pour fabriquer un verre de lunettes (7) à l'aide d'un appareil de moulage (1) comportant deux éléments de moule (2, 3),
un des deux éléments de moule étant un élément de moule en plastique (2) qui est configuré pour déterminer une surface avant du verre de lunettes (7) et l'autre élément de moule étant un élément de moule en verre ou un élément de moule métallique (3) qui est configuré pour déterminer une surface arrière du verre de lunettes (7), **caractérisé en ce que** l'appareil de moulage (1) comprend en outre un élément de moule (13) supportant l'élément de moule en plastique (2), l'élément de moule (13) supportant l'élément de moule en plastique (2) étant en verre et ayant une surface adaptée à la surface arrière de l'élément de moule en plastique (2).

9. Procédé configuré pour fabriquer un appareil de moulage (1) comprenant deux éléments de moule (2, 3) configurés pour fabriquer un verre de lunettes, le procédé comprenant la fourniture de deux éléments de moule,
un des deux éléments de moule étant un élément de moule en plastique (2) qui est configuré pour déterminer une surface avant du verre de lunettes (7) et l'autre élément de moule étant un élément de moule en verre ou un élément de moule métallique (3) qui est configuré pour déterminer une surface arrière du verre de lunettes (7), **caractérisé en ce que** l'appareil de moulage (1) comprend en outre un élément de moule (13) supportant l'élément de moule en plastique (2), l'élément de moule (13) supportant l'élément de moule en plastique (2) étant en verre et ayant une surface adaptée à la surface arrière de l'élément de moule en plastique (2).

10. Procédé selon la revendication 8 ou 9, **caractérisé en ce que** l'autre élément de moule est un élément de moule métallique.

11. Procédé selon la revendication 9 ou 10, **caractérisé en ce qu'**il comprend en outre une étape de moulage par injection ou de moulage par coulée de l'élément de moule en plastique (2).

12. Procédé selon la revendication 11, **caractérisé en ce que** dans une étape de moulage par injection, l'élément de moule en plastique (2) est un élément de moule thermoplastique comprenant des microstructures (8) formées en relief sur la surface de l'élément de moule en plastique (2).

13. Procédé selon l'une quelconque des revendications 8 à 12, **caractérisé en ce qu'**il comprend en outre une étape de revêtement d'un agent de démoulage (9) sur une surface de l'élément de moule en plastique (2) et/ou une étape de fabrication de l'élément de moule en plastique (2) par moulage par injection ou moulage par coulée d'un mélange de matière plastique et d'un agent de démoulage.

14. Procédé selon la revendication 13, **caractérisé en ce que** l'agent de démoulage (9) pour l'étape de revêtement comprend au moins un élément choisi dans le groupe constitué d'un hydrocarbure aliphatique, d'un fluorocarbone, d'une cire et d'un dérivé d'alkyle à longue chaîne.

15. Procédé selon la revendication 13, **caractérisé en ce que** l'agent de démoulage pour l'étape de moulage par injection ou coulée comprend au moins un élément choisi dans le groupe constitué d'un ester d'acide gras, d'une huile de silicone, d'un composé ester de phosphate et d'un érucamide.
